# EUROPÄISCHE PATENTANMELDUNG

(11) **EP 0 582 049 A1**
(43) Veröffentlichungstag der Anmeldung: **09.02.1994**
(21) Anmeldenummer: 93108137.6
(22) Anmeldetag: 19.05.1993
(51) Int. Cl.: B65G 53/40, B65G 53/66, B01D 45/18, F23C 11/02

(54) **Verfahren und Vorrichtung zum Ausschleusen von Feststoffen**

(30) Priorität: 01.08.1992 DE 4225482
(71) Anmelder: DEUTSCHE BABCOCK ENERGIE- UND UMWELTTECHNIK AKTIENGESELLSCHAFT, D-46049 Oberhausen (DE)
(72) Erfinder: Leibrandt, Georg, Dr., W-4044 Kaarst 2 (DE); Kretschmer, Horst, Dr., W-9200 Freiberg (DE)
(74) Vertreter: Müller, Jürgen, Dipl.-Ing.

(57) **Zusammenfassung**

Zum Ausschleusen von heißen oder kalten, feinkörnigen Feststoffen aus einem Raum erhöhten Druckes und zum pneumatischen Fördern in einen Raum geringeren Druckes werden die Feststoffe in einem Zustand des Massenflusses gehalten und anschließend mit Hilfe des unter Systemdruck stehenden Lücken- und Obergases gegen einen Drosselquerschnitt gedrückt. In dem Drosselquerschnitt wird das Lückengas zwischen den Feststoffpartikeln auf einen niedrigeren Druck entspannt. Dabei fluidisieren die Feststoffe und dispergieren in das entspannte Lückengas hinein. Die so fluidisierten Feststoffe werden über eine Förderstrecke in den Raum geringeren Druckes stetig gefördert.

## Beschreibung

Die Erfindung betrifft ein Verfahren und eine Vorrichtung zum Ausschleusen von heißen oder kalten, feinkörnigen Feststoffen aus einem Raum erhöhten Druckes und zum pneumatischen Fördern in einen Raum geringeren Druckes.

Bei bekannten Anlagen Bit einer Druckwirbelschichtfeuerung (VGB Kraftwerkstechnik 63 (1983), Nr. 5, S. 422 - 427) erfolgt das Ausschleusen der Flugasche aus den Abscheidern und der Bettasche mit Hilfe von Druckschleusen, denen eine Kühleinrichtung zur Kühlung der Feststoffe vorgeschaltet ist. Diese Druckschleusen arbeiten diskontinuierlich und erfordern eine Druckquelle sowie durch Armaturen abgesicherte Rohrleitungen, um das Schleusensystem unter wechselnden Druck zu setzen. Ein solches Schleusensystem ist daher mit einem hohen apparativen Aufwand verbunden.

Bei einer anderen bekannten Druckwirbelschichtfeuerung (EP-PS 0 108 505) wird auf ein aus zwei Behältern bestehendes Druckschleusensystem verzichtet, indem der abgeschiedene Feststoff durch ein Rohrleitungssystem gefördert wird, das mit vielen Rohrkrümmern zur abrupten Änderung der Strömungsrichtung versehen ist. Als Fördergas dient die unter Druck stehende Verbrennungsluft, die aus dem den Wirbelschichtreaktor umgebenden Druckgefäß entnommen wird. Durch die häufig wiederholte Änderung der Strömungsrichtung wird der Druck des den Feststoff fördernden Gases abgebaut und der Feststoff entspannt. Dabei ist das Rohrleitungssystem so geführt, daß der Feststoff während des Transportes gekühlt wird.

Um Feststoff aus einem unter erhöhten Druck stehenden Raum unter Verzicht auf ein Druckschleusensystem auszuschleusen, ist es weiterhin bekannt (DE-OS 39 30 769), an den Raum erhöhten Druckes einen Stauraum anzuschließen. Bei der Strömung des Gases durch die Feststoffsäule, die sich in dem Stauraum ausbildet, wird der Gasdruck abgebaut und der Feststoff entspannt. Der entspannte Feststoff wird im Anschluß an den Stauraum durch bei Atmosphärendruck arbeitende mechanische oder pneumatische Förderer abgezogen. Bei dem Betrieb einer solchen Einrichtung zeigte sich, daß unter ungünstigen Bedingungen der Stauraum durch Stopfenbildung soweit verengt werden kann, daß ein ungehindertes Ausfließen des Feststoffes aus dem Stauraum nicht mehr möglich war oder ein Stillstand eintrat. Andererseits zeigte sich, daß sehr feinkörniges Schüttgut sich nicht aufstaute, sondern aus der Vorrichtung herausschoß.

Der Erfindung liegt die Aufgabe zugrunde, ein Verfahren und eine Vorrichtung zu schaffen, durch die auch schlecht fließende und beim Lagern zur Verfestigung neigende Feststoffe kontinuierlich entspannt und stetig und dosiert gefördert werden können und mit deren Hilfe das Entspannen soweit vereinfacht und das Fördern und Dosieren so verbessert wird, daß der apparative Aufwand vergleichsweise gering ist.

Diese Aufgabe wird erfindungsgemäß durch ein Verfahren mit den Merkmalen des Patentanspruches 1 und durch eine Vorrichtung mit den Merkmalen des Patentanspruches 5 gelöst. Vorteilhafte Ausgestaltungen der Erfindung sind Gegenstand der Unteransprüche. Die Patentansprüche 8 bis 10 kennzeichnen ein besonders vorteilhaftes Drossel- und Regelorgan. Die Merkmale der Patentansprüche 13 und 14 dienen der Absicherung des erfindungsgemäßen Systems gegen einen Gasdurchbruch und ein Austreten von Druckgas an einer Stelle stromabwärts von der Drosselstelle.

Unter Anwendung der erfindungsgemäßen Lehre befinden sich die auszuschleusenden Feststoffe im Zustand des Massenflusses, der dadurch definiert ist, daß der gesamte Inhalt des Massenflußbehälters in Bewegung ist, wenn dessen Austragsorgan geöffnet ist. Auf diese Weise wird ein Durchschießen von Gas durch das geöffnete Drosselorgan verhindert. Bei der Entspannung in dem Drosselorgan wird der physikalische Effekt genutzt, daß sich das verdichtete Gas im Lückenvolumen eines unter Druck stehenden Schüttgutes bei einer Entspannung über eine Drossel intensiv ausdehnt und dabei eine äußerst homogene Suspension mit den Feststoffen bildet. Diese Suspension weist dann ideale Fließeigenschaften auf, die anschließend bei der pneumatischen Förderung der Festsfoffe genutzt werden.

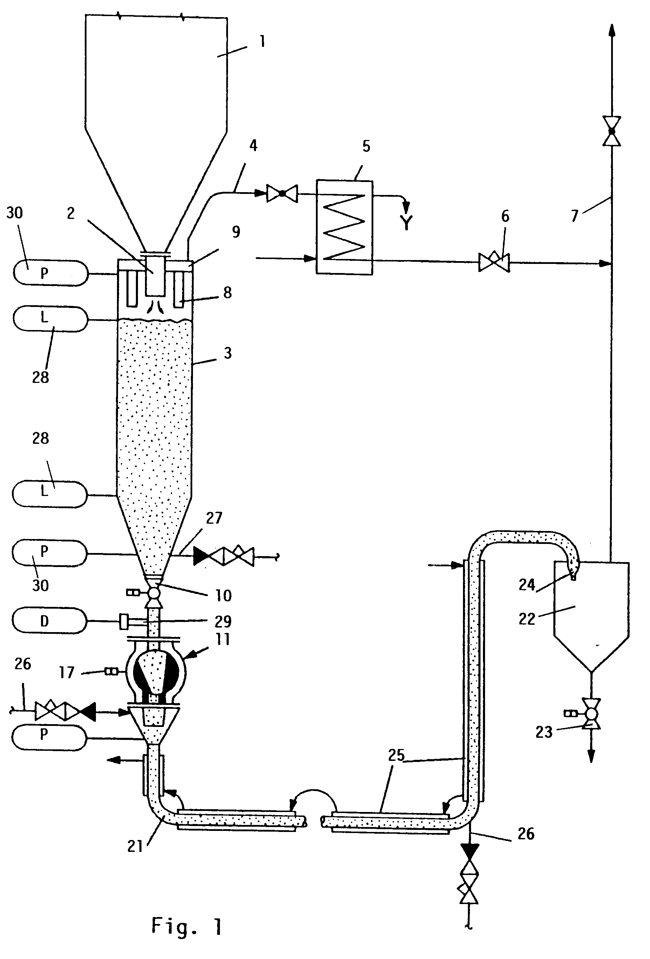

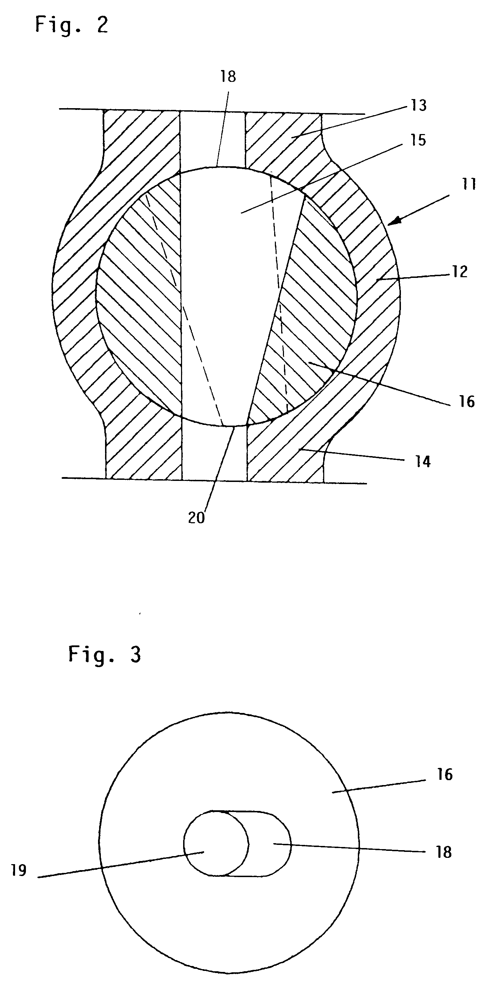

Ein Ausführungsbeispiel der Erfindung ist in der Zeichnung dargestellt und wird im folgenden näher erläutert. Es zeigen: Fig. 1 ein Fließschema zum Ausschleusen von Feststoffen, Fig. 2 ein als Drosselorgan dienender Kugelhahn und Fig. 3 die Draufsicht auf das Küken des Kugelhahnes nach Fig. 2.

Ein Heißgasfilter 1 gehört zu einer nicht gezeigten, unter erhöhtem Druck betriebenen Wirbelschichtfeuerung und dient der Abtrennung der mit dem Rauchgas aus der Brennkammer ausgetragenen Feststoffe. Die abgetrennten Feststoffe sammeln sich in dem im unteren Teil des Heißgasfilters 1 angeordneten Trichter als eine unter dem Druck des Rauchgases stehende Schüttung an. Der Trichter ist mit einem Austragsstutzen 2 für den Austrag der Feststoffe versehen.

Der Austragsstutzen 2 des Heißgasfilters 1 ragt in einen Massenflußbehälter 3 hinein, der unterhalb des Heißgasfilters 1 angeordnet ist. Der Massenflußbehälter 3 ist von schlanker Bauweise, das heißt, er weist ein hohes Verhältnis von Höhe zu Durchmesser auf. An den Massenflußbehälter 3 ist eine Entlüftungsleitung 4 angeschlossen, die über einen Rohrkühler 5 und eine Drosseleinrichtung 6 zu einer Abgasleitung 7 geführt ist. Die Entlüftungsleitung 4 ist mit dem Innenraum von Filterkerzen 8 verbunden, die an dem den Massenflußbehälter 3 oben verschließenden Deckel 9 aufgehängt sind Der untere Teil des Massenflußbehälters 3 ist konisch verjüngt und mit einem verschließbaren Austragsorgan 10 versehen.

Das Austragsorgan 10 des Massenflußbehälters 3 ist mit einem Drosselorgan 11 mit einem veränderbaren Drosselquerschnitt verbunden. Das Drosselorgan 11 kann von beliebiger Bauart sein und z. B. aus einem mit einem Drosselkegel versehenen Hubventil bestehen.

In bevorzugter Weise wird als Drosselorgan 11 ein Kugelhahn verwendet, wie er in den Fig. 2 und 3 gezeigt ist. Dieser Kugelhahn weist ein Gehäuse 12 mit einem oberen, aus der Eintrittsseite liegenden Anschlußstutzen 13 und einem unteren, auf der Austrittsseite liegenden Anschlußstutzen 14 auf. In dem Gehäuse 12 ist drehbar ein kugelförmiges, mit einer Durchgangsbohrung 15 versehenes Küken 16 gelagert, das über einen Antrieb 17 verstellbar ist.

Die Durchgangsbohrung 15 des Kükens 16 weist auf der Eintrittsseite eine Querschnittsfläche 18 auf, die die Form eines Schlitzes hat, der sich in Drehrichtung des Kükens 16 erstreckt. Um stets eine Anlage an der gehäuseseitigen Dichtfläche aufrechterhalten zu können, entspricht die Breite der schlitzförmigen Querschnittsfläche 18 dem Durchmesser des zugeordneten Anschlußstutzens 13. Die Durchgangsbohrung 15 verengt sich in Strömungsrichtung, so daß die Querschnittsfläche 19 der Durchgangsbohrung 15 auf der Austrittsseite geringer ist als auf der Eintrittsseite. Dabei ist die Querschnittsfläche 18 mindestens doppelt so groß wie die Querschnittsfläche 19. Die Querschnittsfläche 19 auf der Austrittsseite bildet mit der entsprechenden Fläche des Anschlußstutzens 14 den Drosselquerschnitt 20, der wegen der Verstellbarkeit des Kükens 16 veränderbar ist. Aufgrund des gewählten Unterschiedes zwischen den Querschnittsflächen 18, 19 an den Enden der Durchgangsbohrung 15 ist gewährleistet, daß in dem gesamten durch den Verstellbereich des Kükens 16 gegebenen Drosselbereich auf der Eintrittsseite des Durchgangsbohrung 15 keine Querschnittsverminderung auftritt.

Gemäß Fig. 3 ist die Querschnittsfläche 19 auf der Austrittsseite der Durchgangsbohrung 15 kreisförmig ausgebildet. Diese Querschnittsfläche 19 kann auch den Anforderungen an die Massenstromregelung angepaßt sein und z. B. die Form eines Dreieckes, einer Ellipse oder einer Parabel annehmen.

An den auf der Austrittsseite liegenden Anschlußstutzen 14 des Gehäuses 12 des Kugelhahnes ist eine Förderleitung 21 angeschlossen, die zu einem Austragsbehälter 22 geführt ist, in dem ein vorzugsweise geringfügig über dem Atmosphärendruck liegender Druck herrscht. Der Austragsbehälter 22 ist mit einer Austragseinrichtung 23 versehen und mit der Abgasleitung 7 verbunden.

Zur Einstellung des Druckes in der Förderleitung 21 ist an deren Einmündung in den Austragsbehälter 22 eine vorzugsweise feste Drossel 24 angeordnet. Die Förderleitung 21 ist von einem Kühlmantel 25 umgeben, der von Kühlwasser durchflossen ist. In die Förderleitung 21 mündet ein Anschluß 26 für die bedarfsweise Zuführung eines Fördergases zur Unterstützung der Feststofförderung und zum Ausgleich des durch Abkühlung verkleinerten Gasvolumens hinein. Aus dem Austragsbehälter 22 werden die Feststoffe entspannt und gekühlt über die Austragseinrichtung 23 abgezogen.

Der Massenflußbehälter 3 ist im unteren Teil mit einem Anschluß 27 für die Zuführung eines Gases zur Auflockerung der Feststoffe versehen. Weiterhin sind in verschiedenen Höhen zwei Füllstandsmesser 28 an dem Massenflußbehälter 3 angebracht, die dem höchsten und den niedrigsten Füllstand in dem Massenflußbehälter 3 anzeigen und mit dem Antrieb 17 des Drosselorgans 11 verbunden sind. Zwischen dem Austragsorgan 10 des Massenflußbehälters 3 und dem Drosselorgan 11 befindet sich eine Dichtesonde 29, die ebenfalls mit dem Antrieb 17 des Drosselorgans 11 Verbunden ist und mit ihr eine Sicherheitsschaltung bildet. Ferner ist der Massenflußbehälter 3 mit zwei Druckmessern 30 versehen.

Das Heißgasfilter 1 stellt einen Raum erhöhten Druckes dar, aus dem Feststoffe ausgeschleust werden sollen. Als ein solcher unter erhöhtem Druck stehender Raum kommt auch jeder andere mit heißem oder kaltem, feinkörnigem Schüttgut gefüllter Behälterauslauf in Betracht. Die Feststoffe werden aus dem Heißgasfilter 1 in den Massenflußbehälter 3 übergeführt, wo sie in einem Zustand des Massenflusses gehalten werden und gleichmäßig über den Behälterquerschnitt verteilt ausfließen würden, sobald das Austragsorgan 10 geöffnet würde. Nach Stillständen über eine längere Zeit entlüften und verfestigen insbesondere feinkörnige Schüttgüter und laufen unter Umständen nicht mehr aus. Befinden sich die Feststoffe in einem solchen zeitverfestigten Zustand, was nach einem Stillstand des Heißgasfilters 1 der Fall sein kann, so wird über den Anschluß 27 Gas zur Auflockerung in die Feststoffschicht innerhalb des Massenflußbehälters 3 eingeblasen und auf diese Weise der Massenfluß wieder hergestellt.

Für den Fall, daß insbesondere sehr feinkörnige Feststoffe infolge Brückenbildung in dem Trichter des Heißgasfilter 1 nicht ausfließen, wird die Entlüftungsleitung 4 geöffnet, wodurch eine Gasströmung erzeugt wird. Diese Gasströmung dient als treibende Kraft für eine Feststofförderung aus dem Heißgasfilter 1 in den Massenflußbehälter 3.

Die Feststoffe werden aus dem Massenflußbehälter 3 durch das Systemgas, das über die Verbindung mit dem Heißgasfilter 1 in dem Massenflußbehälter 3 als Obergas ansteht, unter Ausnutzung der hohen Druckfestigkeit des Schüttung gegen das Drosselorgan 11 gedrückt. Durch eine Freigabe des in der Größe veränderlichen Drosselquerschnittes 20 und durch den hohen Druckgradienten wird in dem Drosselquerschnitt 20 eine intensive Entspannung des Lückengases herbeigeführt. Unter Nutzung der niedrigen Zugfestigkeit der Schüttung wird das Gemisch aus Feststoff und Lückengas fluidisiert. Dadurch werden in dem entspannten Lückengas die Feststoffteilchen ideal dispergiert und fließfähig gemacht. Die Fließdichte des Feststoffstromes, die von der gewünschten Strömungs- bzw. Förderart, wie Fließ-, Misch- oder Flugförderung abhängig ist, wird durch den Grad der Entspannung auf einen wahlbaren Druck in der Förderleitung 21 eingestellt. Die Änderung der Fließdichte bzw. des Druckes erfolgt über eine entsprechende Öffnung des Drosselorgans 11, durch die Anordnung einer festen Drossel 24 am Ende der Förderleitung 21 oder durch Einblasen zusätzlichen Fördergases durch den Anschluß 26. Der Mengenfluß der fluidisierten Feststoffe wird durch eine Änderung des variablen Drosselquerschnittes 20 und/oder eine Änderung des Druckes des Obergases im Massenflußbehälter 3 eingestellt.

Mit Hilfe der Dichtesonde 29 am Ausgang des Massenflußbehälters 3 wird die Fließdichte des in das Drosselorgan 11 eintretenden Feststoffstromes bestimmt. Bei einer Abweichung von dem eingestellten Sollwert kann auf einen Gasdurchbruch infolge einer Kanal- oder Blasenbildung oder einer Störung des Massenflusses geschlossen werden. In diesem Fall gibt die Dichtesonde 29 ein Signal auf den Antrieb 17 zum Schließen des Drosselorganes 11. Ähnlich gibt der untere Füllstandsmesser 28 ein Signal zum Schließen des Drosselorganes 11, wenn der Füllstand in dem Massenflußbehälter 3 unter einen tiefsten Stand gesunken ist.

## Patentansprüche

1. Verfahren zum Ausschleusen von heißen oder kalten, feinkörnigen Feststoffen aus einem Raum erhöhten Druckes und zum pneumatischen Fördern in einen Raum geringeren Druckes, dadurch gekennzeichnet, daß die Feststoffe in einem Zustand des Massenflusses gehalten werden, daß diese Feststoffe mit Hilfe des unter Systemdruck stehenden Lücken- und Obergases gegen einen Drosselquerschnitt gedrückt werden, daß in dem Drosselquerschnitt das Lückengas zwischen den Feststoffpartikeln auf einen niedrigeren Druck entspannt wird und dabei die Feststoffe fluidisieren und in das entspannte Lückengas hinein dispergieren und daß die so fluidisierten Feststoffe über eine Förderstrecke in den Raum geringeren Druckes stetig gefördert werden.

2. Verfahren nach Anspruch 1, dadurch gekennzeichnet, daß der Mengenfluß der fluidisierten Feststoffe durch eine Änderung des Drosselquerschnittes und/oder eine Änderung des Druckes des Obergases eingestellt wird.

3. Verfahren nach Anspruch 1 oder 2, dadurch gekennzeichnet, daß die fluidisierten Feststoffe durch ein zusätzlich in die Förderstrecke eingeblasenes Gas beaufschlagt werden und daß durch eine Änderung des zusätzlichen Gasvolumenstromes die Art der Gas-Feststoff-Strömung eingestellt wird.

4. Verfahren nach einem der Ansprüche 1 bis 3, dadurch gekennzeichnet, daß die Höhe des Druckes des in der Förderstrecke geförderten Gas-Feststoff-Gemisches über eine Drosselstelle am Ende der Förderstrecke eingestellt wird.

5. Vorrichtung zum Ausschleusen von heißen oder kalten, feinkörnigen Feststoffen aus einem Raum erhöhten Druckes und zum pneumatischen Fördern in einen Raum geringeren Druckes, dadurch gekennzeichnet, daß unterhalb des Raumes erhöhten Druckes ein mit diesem verbundener Massenflußbehälter (3) angeordnet ist, dessen verschließbares Austragsorgan (10) mit einem Drosselorgan (11) verbunden ist und daß von dem Drosselorgan (11) zu dem Raum geringeren Druckes eine Förderleitung (21) geführt ist.

6. Vorrichtung nach Anspruch 5, dadurch gekennzeichnet, daß die Förderleitung (21) gekühlt ist

7. Vorrichtung nach Anspruch 5, dadurch gekennzeichnet, daß das Drosselorgan (11) mit einem veränderbaren Drosselquerschnitt (20) versehen ist.

8. Vorrichtung nach den Ansprüchen 5 und 7, dadurch gekennzeichnet, daß das Drosselorgan (11) aus einem Kugelhahn besteht, der ein Gehäuse (12) mit zwei Anschlußstutzen (13, 14) und ein in dem Gehäuse (12) drehbar gelagertes und mit einer Durchgangsbohrung (15) versehenes Küken (16) aufweist und daß die Durchgangsbohrung (15) des Kükens (16) auf der Eintrittsseite mindestens die doppelte Querschnittsfläche gegenüber der Austrittsseite aufweist.

9. Vorrichtung nach Anspruch 8, dadurch gekennzeichnet, daß die Querschnittsfläche (19) der Durchgangsbohrung (15) des Kükens (16) auf der Austrittsseite den Anforderungen an die Massenstromregelung angepaßt ist.

10. Vorrichtung nach Anspruch 8 oder 9, dadurch gekennzeichnet, daß die Querschnittsfläche (18) der Durchgangsbohrung (15) des Kükens (16) auf der Eintrittsseite die Form eines sich in Drehrichtung des Kükens (16) erstreckenden Schlitzes aufweist, dessen Breite dem Durchmesser des Anschlußstutzens (13) des Gehäuses (12) entspricht.

11. Vorrichtung nach einem der Ansprüche 5 bis 10, dadurch gekennzeichnet, daß der Massenflußbehälter (3) mit einem Anschluß (27) zur Zuführung eines Gases zur Auflockerung des Feststoffe versehen ist.

12. Vorrichtung nach einem der Ansprüche 5 bis 11, dadurch gekennzeichnet, daß an den oberen Teil des Massenflußbehälters (3) eine Entlüftungsleitung (4) angeschlossen ist.

13. Vorrichtung nach einem der Ansprüche 5 bis 12, dadurch gekennzeichnet, daß der Massenflußbehälter (3) mit zwei in verschiedenen Höhen angebrachten Füllstandsmessern (28) versehen ist, die mit dem Antrieb (17) des Kugelhahnes verbunden sind.

14. Vorrichtung nach einem der Ansprüche 5 bis 13, dadurch gekennzeichnet, daß zwischen dem Austragsende des Massenflußbehälters (3) und dem Drosselorgan (11) eine Dichtesonde (29) angeordnet ist, die mit dem Antrieb (17) des Kugelhahnes verbunden ist.

15. Vorrichtung nach einem der Ansprüche 5 bis 14, dadurch gekennzeichnet, daß an der Einmundung der Förderleitung (21) in den Raum geringeren Druckes eine variable oder feste Drossel (24) angeordnet ist.
